# EUROPEAN PATENT SPECIFICATION

(11) **EP 2 489 015 B1**
(45) Date of publication and mention of the grant of the patent: **28.12.2016**
(21) Application number: 10768551.3
(22) Date of filing: 22.09.2010
(51) Int. Cl.: G07C 5/00, B60R 25/045, B60W 40/09, G07C 5/08

(54) **TELEMATIC APPLIANCE FOR VEHICLES**
TELEMATISCHE VORRICHTUNG FÜR FAHRZEUGE
APPAREIL TÉLÉMATIQUE POUR VÉHICULES

(30) Priority: 15.10.2009 IT MO20090251
(43) Date of publication of application: 22.08.2012
(73) Proprietor: Meta System S.p.A., 42124 Reggio Emilia (IT)
(72) Inventor: SIMONAZZI, Giuseppe, I-42123 Reggio Emilia (IT)
(74) Representative: Brunacci, Marco
(86) International application number: PCT/IB2010/002379
(87) International publication number: WO 2011/045640

(56) References cited:
- EP-A2- 1 909 236
- DE-A1- 3 902 339
- US-A- 5 939 861
- US-A1- 2004 153 362
- US-A1- 2004 239 502
- US-A1- 2007 239 331
- US-B1- 7 502 672
- US-B2- 7 567 169

## Description

### Technical Field

The present invention relates to a telematic appliance for vehicles usable, in particular, for determining the ways a vehicle is used.

### Background Art

Telematic appliances are known which, once installed on board a vehicle, are able to determine the way the vehicle itself is used over time.

Such appliances find application, e.g., in the insurance field, to determine personalised tariffs, on the basis of how often the vehicle is actually used, in the environmental field, to determine the polluting emissions of a vehicle in real time, or in the management of vehicle rental, so as to achieve greater automation of tariffing and vehicle pick-up and return procedures.

The appliances of known type generally comprise a unit that can be installed on board the vehicle, inside the passenger compartment, and can be connected to the electronics of the vehicle itself.

Such appliances also comprise a radio-wave device, of the type commonly used in the field of mobile phones such as, e.g., a GSM, GPRS, UMTS transceiver or the like.

The radio-wave device, in particular, supports the sending of information collected by the appliance towards a remote data storage and processing unit.

If necessary, the radio-wave device is used for receiving, from the remote unit, updates for the software that controls the appliance on board the vehicle.

Such appliances, in general, also comprise a satellite receiver, of the type of a GPS receiver or equivalent, which allows locating the vehicle by means of the latitude, longitude and, if necessary, altitude coordinates.

In point of fact, the operation of the appliance envisages the collection, at regular time intervals, of information relating to the position of the vehicle by means of the GPS receiver and the subsequent transmission of such information to the remote unit by means of the radio-wave device.

The information thus collected by the remote unit is then processed to determine data useful for the purpose of the specific application ambit.

Further information can be collected by the appliance by using further devices such as, e.g., an accelerometer installed on the vehicle and suitable for detecting sudden accelerations and decelerations.

These appliances of known type, nevertheless, do have a number of drawbacks. In fact, the installation of the appliance on the vehicle is lengthy and complicated.

In particular, the unit must be installed inside the vehicle compartment, in correspondence to the dashboard, and must be suitably connected to the vehicle electronics.

Such procedure of installation of the unit requires a long time (generally about forty minutes) consequently increasing the relevant labour costs.

The document US 7 502 672 B1 discloses an in-vehicle device which communicates with global network based data processing resources for the purpose of transacting e-commerce and e-business. Particularly, the e-commerce and e-business transactions can include accessing auto part databases, warranty, customer services, vehicle security and vehicle service management, interactive advertising, remote monitoring of the vehicle performance and other transactions.

The document DE 39 02 339 A1 discloses a data capturing arrangement for a battery-operated vehicle provided with: a vehicle-information transmitter for vehicle data, a battery-information transmitter for battery data, an information processor and memory which arranged on the battery and receive the vehicle data and battery data, a data transmitter on the battery for transmitting the data collected in the information memory and a data evaluation device which receives and evaluates the data output by the data transmitter.

The document US 7 567 169 B2 discloses a device for a motor vehicle for providing data relating to an accident, wherein the data relating to an accident includes both position data of the motor vehicle and data relating to the vehicle. However, also for these appliances of known type the installation on the vehicle is lengthy and complicated.

The document US 5,939,861 relates to a control system used in electric vehicles (particular hybrid cars) for controlling the charging and discharging of a rechargeable battery. The system uses a battery sensors provided with a temperature detector and with means for detecting the charging/discharging voltage at the poles of the battery cells.

### Summary of the Invention

The present invention is defined in the appended independent claim 1 to which reference should be made. Advantageous features are set out in the appended dependent claims.

### Description of the Invention

The main aim of the present invention is to provide a telematic appliance for vehicles that is easy and quick to install.

Another object of the present invention is to provide a telematic appliance for vehicles which allows overcoming the mentioned drawbacks of the state of the art within the ambit of a simple, rational, easy and effective to use as well as low cost solution.

The above objects are achieved by the present telematic appliance for vehicles, comprising electronic processing means installable on a vehicle and having:
- at least a management and control unit suitable for managing and controlling information relating to said vehicle,
- at least a communication unit associated with said management and control unit and suitable for communicating with at least a remote processing unit, characterized by the fact that it comprises support means for supporting said electronic processing means, fastening means for fastening said support means to the battery of said vehicle and electric connection means for connecting said electronic processing means to the electric poles of said battery.

### Brief Description of the Drawings

Other characteristics and advantages of the present invention will become more evident from the description of a preferred, but not sole, embodiment of a telematic appliance for vehicles, illustrated purely as an example but not limited to the annexed drawings in which:
figure 1 is a schematic axonometric view of the appliance according to the invention installed on an electric battery for vehicles;
figure 2 is a functional diagram of the appliance according to the invention.

### Embodiments of the Invention

With particular reference to such figures, globally indicated by 1 is a telematic appliance installable on vehicles and usable, e.g., in the insurance field, to determine personalised tariffs on the basis of how often the vehicle is actually used, in the environmental field, to determine the polluting emissions of a vehicle in real time, or in the management of vehicle rental, so as to achieve greater automation of tariffing and vehicle pick-up and return procedures. Advantageously, the appliance 1 can be fixed to the battery B of a vehicle and can be electrically connected directly to the electric poles P+ and P- of the battery itself.

This allows considerably reducing the installation times of the appliance 1 compared to conventionally used and known telematic appliances.

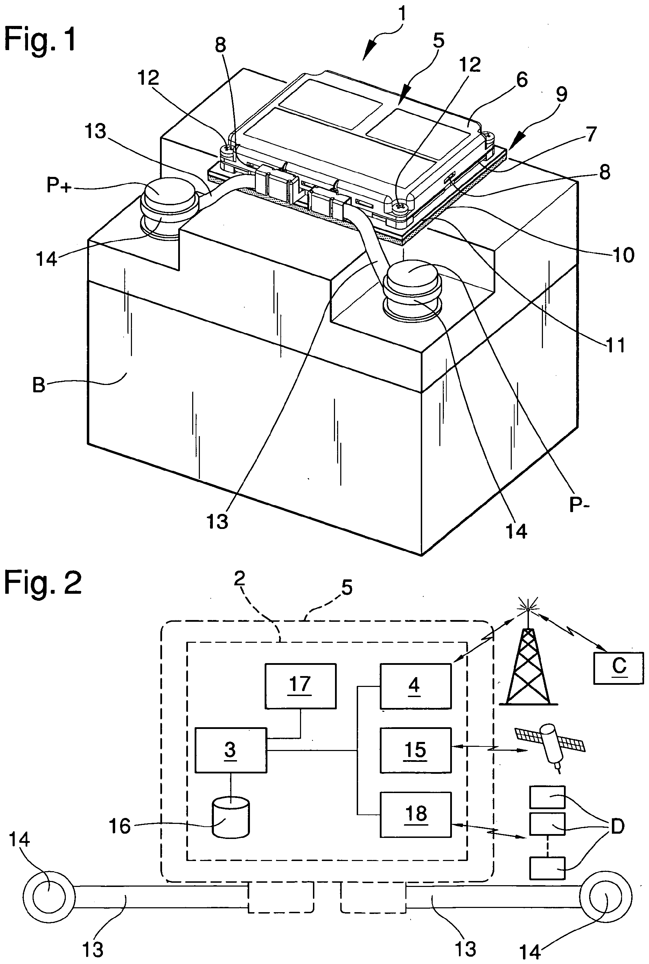

The appliance 1 comprises electronic processing means, schematically shown in figure 2 and generally indicated with the reference 2, suitable for collecting and/or processing information relating to the use and state of the vehicle.

In particular, the electronic processing means 2 comprise a management and control unit 3, of the micro processor type or the like, suitable for managing and controlling the collected information.

Advantageously, the electronic processing means 3 comprise a communication unit 4, associated with the management and control unit 3 and suitable for communicating with at least a remote processing unit C.

The communication unit 4 comprises one or more transmitters and/or receivers operating with protocols conventionally used in the field of mobile phones such as, e.g., GSM, GPRS, UMTS or the like.

The communication unit 4 also comprises at least an antenna for the transmission/receiving of signals towards/from the remote processing unit C. Alternatively, the communication unit 4 can be associated with one or more external antennas installed on the vehicle.

The management and control unit 3 associated with the communication unit 4 is suitable for managing the communication unit itself for sending and receiving information towards/from the remote processing unit C.

The remote processing unit C, usefully, can be equipped with an appropriate software program suitable for managing the information coming from the communication unit 4 and suitable for using such information, e.g., to determine personalised insurance tariffs on the basis of the actual use of the vehicle, for detecting the polluting emissions of a vehicle in real time or for automating the tariff, pick-up and return procedures of vehicles available for rent. Advantageously, the appliance 1 comprises support means for supporting the electronic processing means 2, generally indicated by the reference 5 and made up of a substantially box-shaped container body suitable for completely housing the electronic processing means 2.

Usefully, the container body 5 comprises a first half-shell 6 and a second half-shell 7 integrally associable the one with the other by means of interlocking means 8.

Different shapes of the container body 5 cannot however be ruled out.

The appliance 1 also comprises fastening means 9 for fastening the container body 5 to a battery B for vehicles, preferably in correspondence to the upper portion of the battery itself.

In particular, the fastening means 9 can be made up of an adhesive layer 10 positioned between the container body 5 and the upper portion of the battery B. Usefully, as shown in the figure 1, the fastening means 9 can comprise a further securing element 11, of the type of a plate, of one or more brackets or the like. The securing element ²11 can be fixed to the upper portion of the battery B by interposition of the adhesive layer 10 and the container body 5 can be fixed to the securing element 11 by means of one or more retention elements 12.

As shown in the figure 1, the retention elements 12 can be made up of four screws insertable inside respective through holes obtained in correspondence to the corners of the container body 5 and engageable in appropriate threaded holes on the securing element 11.

The use of fastening means 9 different to those shown in the figure 1 cannot however be ruled out, composed only of securing means of mechanical type, wherein the adhesive layer 10 is not used or, alternatively, composed only of the adhesive layer 10 positioned directly between the upper portion of the battery B and the lower portion of the container body 5.

Advantageously, the appliance 1 comprises electric connection means 13 for connecting the electronic processing means 2 to the electric poles P+ and P- of the battery B.

In particular, the electric connection means 13 are composed of a pair of power cables connected to the electronic processing means 2 and having, at the free extremities, respective electric connectors 14 that can be connected to the positive electric pole P+ and to the negative electric pole P- of the battery B. Usefully, the electronic processing means 2 can comprise a locating device 15 for locating the position of the battery B, and therefore of the vehicle, associated with the management and control unit 3.

Alternatively, the electronic processing means 2, in particular the management and control unit 3, can be associated with a locating device of conventional type, outside the container body 5 and installed on the vehicle.

The locating device 15, in particular, comprises at least a satellite signal receiver of the type used in satellite navigation systems such as Global Positioning System (GPS), Galileo Positioning System and the like.

Usefully, the locator device 15 can be used to collect information on the position of the vehicle over time, then usable by the remote processing unit C. The electronic processing means 2, furthermore, comprise storage means 16, made up e.g. of a memory of the re-writable type, suitable for storing the information relating to the use and the state of the vehicle.

Usefully, the storage means 16 are suitable for storing an identification code of the appliance 1 and/or an identification code of the vehicle.

The electronic processing means 2 comprises verification means, composed of an appropriate software program managed by the management and control unit 3, suitable for checking whether such codes are correct or not.

In an example, which is not part of the invention, such codes, once sent by means of the communication unit 4, can be controlled by verification means present on the remote processing unit C and can be used to detect an unauthorised use of the appliance 1 or of the vehicle.

Usefully, the management and control unit 3 can be connected to an anti-ignition device of conventional type installed on the vehicle and suitable for communicating with the electronics of the vehicle itself to force the engine cut in the case of the above verification means detecting that at least one between the identification code of the appliance 1 and the identification code of the vehicle is incorrect.

Inside the container body 5, the appliance 1 comprises a device for measuring the instantaneous acceleration/deceleration of the motor vehicle, generically indicated in figure 2 with the reference 17, made up e.g. of a three-axis accelerometer.

The accelerometer 17 can be used, e.g., to detect any accidents of the motor vehicle, to detect changes in the inclination of the motor vehicle in case of any attempt at theft by lifting or to detect the polluting emissions of the vehicle according to sudden accelerations or decelerations during driving.

The electronic processing means 2 can also comprise a supplementary communication unit, indicated in the figure 2 with the reference 18, suitable for communicating with at least one or more electronic devices D installed on the vehicle.

In a preferred but not only embodiment of the appliance 1, the supplementary communication unit 18 comprises means for transmitting/receiving signals by means of conveyed waves, through the power supply line of the vehicle connected to the battery B.

In a first alternative embodiment, the supplementary communication unit 18 can comprise means for transmitting/receiving radio-frequency signals towards/from one or more radio-frequency modules connected to respective electronic devices D.

The transmission/receiving means and the radio-frequency modules of the devices D can use communication standards of conventional type, such as the Bluetooth® standard or the like.

Usefully, the devices D having such Bluetooth® modules can be made up, e.g., of audio devices for managing emergency calls or managing a voice connection in general.

In a second alternative embodiment, the appliance 1 can envisage an electric connection port for connecting to the conventional CAN (Controller Area Network) channel of the vehicle and the supplementary communication unit 18 can comprise means for transmitting/receiving signals through such channel. The electronic devices D can be made up of any device present or installed on the vehicle and suitable for communicating with the electronic processing means 2 such as, e.g., an alarm unit, a siren, a vehicle anti-ignition device, a portable device of the type of a mobile phone, a palm-held computer, a personal computer or the like or the locating device 15 and the accelerometer 17, in the event of these being outside the container body 5.

Usefully, the appliance 1 can be equipped with an emergency supply unit, connected at least to the management and control unit 3 and to the communication unit 4, and which can be enabled to allow sending at least an emergency communication to the remote processing unit C in the case of detachment of the battery B or in the case of tampering with the battery B or with the appliance 1 in general.

In particular, the emergency supply unit can comprise a buffer battery normally connected to the battery B.

In a preferred embodiment, the emergency supply unit is made up of a so-called supercapacitor, i.e., a capacitor able to accumulate exceptionally large quantities of electricity compared to traditional capacitors.

It has in point of fact been ascertained how the described invention achieves the proposed objects.

In particular, the fact is underlined that the telematic appliance for vehicles according to the invention is easily and quickly installable on board a vehicle. The presence of the fastening means, in fact, allows quickly fixing the appliance directly to the vehicle battery.

The electric connection means, furthermore, allow connecting the appliance 1 directly to the electric poles of the battery avoiding, therefore, all those complicated and long operations which are normally required to connect an appliance of known type to the electronics of a vehicle.

## Claims

1. Telematic appliance (1) for vehicles, comprising electronic processing means (2) installable on a vehicle, wherein said electronic processing means (2) comprises:
- at least a management and control unit (3) adapted to manage and control information relating to said vehicle,
- at least a communication unit (4) associated with said management and control unit (3) and adapted to communicate with at least a remote processing unit (C),
- at least a locating device (15) for locating the position of said vehicle, and
- at least a device for measuring the instantaneous acceleration/deceleration (17) of said vehicle,
wherein the telematic appliance (1) comprises electric connection means (13) adapted to connect said electronic processing means (2) to said battery (B);
the telematic appliance (1) being **characterized by** the fact that comprises support means (5) made up of a substantially box-shaped container body (5) which completely houses the electronic processing means (2) and fastening means adapted for fixing said box-shaped container body (5) onto an upper portion of said battery (B), and by the fact that said electric connection means (13) are composed of a pair of power cables (13) connected to the electronic processing means 2 and having, at the free extremities, respective electric connectors (14) that can be directly connected to the positive electric pole (P+) and to the negative electric pole (P-) of the battery (B),
the telematic appliance being further **characterized by** the fact that said electronic processing means (2) comprise storage means (16) adapted to store an identification code of the appliance (1) and an identification code of the vehicle, and that said electronic processing means comprise verification means configured to check whether said identification code of the appliance (1) and said identification code of the vehicle are correct or not, wherein said electronic processing means (2) are connectable with an anti-ignition device of said vehicle and are adapted to force an engine cut in the case of said verification means detecting that at least one between said identification code of the appliance and said identification code of the vehicle is incorrect.

2. Telematic appliance (1) according to claim 1, **characterized by** the fact that said fastening means (9) comprise at least an adhesive layer (10) positioned between said container body (5) and said battery (B).

3. Telematic appliance (1) according to claim 1, **characterized by** the fact that said fastening means (9) are of the type of mechanical securing means.

4. Telematic appliance (1) according to one or more of the preceding claims, **characterized by** the fact that said fastening means (9) comprise at least a securing element (11) associable with said battery (B) and at least a retention element (12) for retaining said container body (5) on said securing element (11).

5. Telematic appliance (1) according to the claim 1, **characterized by** the fact that said communication unit (4) comprises at least a transmitter and/or a receiver operating with mobile phone protocols.

6. Telematic appliance (1) according to the claim 5, **characterized by** the fact that said mobile phone protocols are selected from the group comprising GSM, GPRS, UMTS or the like.

7. Telematic appliance (1) according to claim 1, **characterized by** the fact that said communication unit (4) comprises at least an antenna for the transmission/receiving of at least a signal towards/from said remote processing unit (C).

8. Telematic appliance (1) according to claim 1 **characterized by** the fact that said locating device (15) comprises at least a satellite signal receiver.

9. Telematic appliance (1) according to one or more of the preceding claims, **characterized by** the fact that it comprises a supplementary communication unit (18) suitable for communicating with at least an electronic device (D) installed on said vehicle.

10. Telematic appliance (1) according to the claim 9, **characterized by** the fact that said supplementary communication unit (18) comprises means of transmission/receiving by means of conveyed waves through the supply line of the vehicle associated with said battery (B).

11. Telematic appliance (1) according to the claim 9, **characterized by** the fact that said supplementary communication unit (18) comprises means of transmission/receiving of radio-frequency signals towards/from at least a radio-frequency module associated with said electronic device (D).

12. Telematic appliance (1) according to the claim 9, **characterized by** the fact that it comprises at least an electric connection port associated with said electronic processing means (2) and associable with a communication channel of said vehicle of the CAN (Controller Area Network) type or the like, said supplementary communication unit (18) having means of transmission/receiving of signals through said communication channel.

13. Telematic appliance (1) according to one or more of the preceding claims, **characterized by** the fact that it comprises at least an emergency supply unit, associated with said electronic processing means (2) and which can be enabled to allow sending at least an emergency communication towards said remote processing unit (C) in case of detachment and/or tampering with said battery (B).

14. Telematic appliance (1) according to claim 13, **characterized by** the fact that said emergency supply unit is of the type of a supercapacitor or the like.

## Patentansprüche

1. Telematische Vorrichtung (1) für Fahrzeuge, mit einer elektronischen Verarbeitungseinrichtung (2), die in einem Fahrzeug installiert werden kann, wobei die elektronische Verarbeitungseinrichtung (2) umfasst:
- wenigstens eine Management- und Kontrolleinheit (3), die so ausgelegt ist, dass diese eine das Fahrzeug betreffende Information managt und kontrolliert,
- wenigstens eine Kommunikationseinheit (4), die mit der Management- und Kontrolleinheit (3) verbunden ist und so ausgelegt ist, dass diese mit wenigstens einer Fernverarbeitungseinheit (C) kommuniziert,
- wenigstens eine Ortungseinrichtung (15) zum Orten der Position des Fahrzeugs, und
- wenigstens eine Einrichtung zum Messen einer momentanen Beschleunigung/Verzögerung (17) des Fahrzeugs,
wobei die telematische Vorrichtung (1) eine elektrische Verbindungseinrichtung (13) umfasst, die so ausgelegt ist, dass diese die elektronische Verarbeitungseinrichtung (2) mit der Batterie (B) verbindet;
wobei die telematische Vorrichtung (1) **dadurch gekennzeichnet ist, dass** diese eine Trägereinrichtung (5) umfasst, die aus einem im Wesentlichen kastenförmigen Behältergehäuse (5) hergestellt ist, welches die elektronische Verarbeitungseinrichtung (2) vollständig aufnimmt, und eine Befestigungseinrichtung, die so ausgebildet ist, dass diese das kastenförmige Behältergehäuse (5) auf einem oberen Bereich der Batterie (B) befestigt, und dadurch, dass die elektronische Verbindungseinrichtung (13) aus einem Paar Stromkabeln (13) zusammengesetzt ist, die mit der elektronischen Verarbeitungseinrichtung (2) verbunden sind und an den freien Enden jeweilige elektrische Anschlüsse (14) aufweisen, die direkt mit dem positiven elektrischen Pol (P+) und mit dem negativen elektrischen Pol (P-) der Batterie (B) verbunden werden können, wobei die telematische Vorrichtung ferner **dadurch gekennzeichnet ist, dass** die elektronische Verarbeitungseinrichtung (2) eine Speichereinrichtung (16) umfasst, die so ausgelegt ist, dass diese einen Identifikationscode der Vorrichtung (1) und einen Identifikationscode des Fahrzeugs speichert, und dass die elektronische Verarbeitungseinrichtung eine Verifikationseinrichtung umfasst, die so konfiguriert ist, dass diese prüft, ob der Identifikationscode der Vorrichtung (1) und der Identifikationscode des Fahrzeugs korrekt sind oder nicht, wobei die elektronische Verarbeitungseinrichtung (2) mit einer Anti-Zündeinrichtung des Fahrzeugs verbunden werden kann und so ausgelegt ist, dass diese ein Abschalten des Motors in dem Falle erzwingt, dass die Verifikationseinrichtung detektiert, dass wenigstens der Identifikationscode der Vorrichtung und/oder der Identifikationscode des Fahrzeugs nicht korrekt ist/sind.

2. Telematische Vorrichtung (1) nach Anspruch 1, **dadurch gekennzeichnet, dass** die Befestigungseinrichtung (9) wenigstens eine Haftschicht (10) umfasst, die zwischen dem Behältergehäuse (5) und der Batterie (B) positioniert ist.

3. Telematische Vorrichtung (1) nach Anspruch 1, **dadurch gekennzeichnet, dass** die Befestigungseinrichtung (9) vom Typ her mechanische Sicherungsmittel sind.

4. Telematische Vorrichtung (1) nach einem oder mehreren der vorhergehenden Ansprüche, **dadurch gekennzeichnet, dass** die Befestigungseinrichtung (9) umfasst wenigstens ein Sicherungselement (11), das mit der Batterie (B) verbunden werden kann, und wenigstens ein Halteelement (12) zum Halten des Behältergehäuses (5) an dem Sicherungselement (11).

5. Telematische Vorrichtung (1) nach Anspruch 1, **dadurch gekennzeichnet, dass** die Kommunikationseinheit (4) wenigstens einen Sender und/oder einen Empfänger umfasst, der/die mit Mobilfunk-Protokollen arbeitet/arbeiten.

6. Telematische Vorrichtung (1) nach Anspruch 5, **dadurch gekennzeichnet, dass** die Mobilfunk-Protokolle ausgewählt sind aus der Gruppe bestehend aus GSM, GPRS, UMTS oder dergleichen.

7. Telematische Vorrichtung (1) nach Anspruch 1, **dadurch gekennzeichnet, dass** die Kommunikationseinheit (4) wenigstens eine Antenne für das Senden/Empfangen wenigstens eines Signals in Richtung/aus Richtung der Fernverarbeitungseinheit (C) umfasst.

8. Telematische Vorrichtung (1) nach Anspruch 1, **dadurch gekennzeichnet, dass** die Ortungseinrichtung (15) wenigstens einen Satellitensignalempfänger umfasst.

9. Telematische Vorrichtung (1) nach einem oder mehreren der vorhergehenden Ansprüche, **dadurch gekennzeichnet, dass** diese eine zusätzliche Kommunikationseinheit (18) umfasst, die zum Kommunizieren mit wenigstens einer in dem Fahrzeug installierten elektronischen Einrichtung (D) geeignet ist.

10. Telematische Vorrichtung (1) nach Anspruch 9, **dadurch gekennzeichnet, dass** die zusätzliche Kommunikationseinheit (18) Mittel zum Senden/Empfangen mithilfe übertragener Wellen über die mit der Batterie (B) verbundene Versorgungsleitung des Fahrzeugs umfasst.

11. Telematische Vorrichtung (1) nach Anspruch 9, **dadurch gekennzeichnet, dass** die zusätzliche Kommunikationseinheit (18) Mittel zum Senden/Empfangen von Hochfrequenzsignalen in Richtung/aus Richtung wenigstens eines Hochfrequenzmoduls umfasst, dass mit der elektronischen Einrichtung (D) verbunden ist.

12. Telematische Vorrichtung (1) nach Anspruch 9, **dadurch gekennzeichnet, dass** diese wenigstens einen elektrischen Verbindungsanschluss umfasst, der mit der elektronischen Verarbeitungseinrichtung (2) verbunden ist und mit einem Kommunikationskanal des Fahrzeugs des CAN (Controller Area Network)-Typs oder dergleichen verbunden werden kann, wobei die zusätzliche Kommunikationseinheit (18) Mittel zum Senden/Empfangen von Signalen über den Kommunikationskanal aufweist.

13. Telematische Vorrichtung (1) nach einem oder mehreren der vorhergehenden Ansprüche, **dadurch gekennzeichnet, dass** diese wenigstens eine Notfall-Versorgungseinheit umfasst, die mit der elektronischen Verarbeitungseinrichtung (2) verbunden ist und die in die Lage versetzt werden kann, im Falle einer Ablösung und/oder Manipulation der Batterie (B) ein Senden wenigstens einer Notfallkommunikation in Richtung der Fernverarbeitungseinheit (C) zu erlauben.

14. Telematische Vorrichtung (1) nach Anspruch 13, **dadurch gekennzeichnet, dass** die Notfall-Versorgungseinheit von der Art her ein Superkondensator oder dergleichen ist.

## Revendications

1. Appareil télématique (1) pour véhicules, comprenant des moyens de traitement électroniques (2) aptes à être installés sur un véhicule, dans lequel lesdits moyens de traitement électroniques (2) comprennent :
- au moins une unité de gestion et de contrôle (3) apte à gérer et contrôler des informations relatives audit véhicule,
- au moins une unité de communication (4) associée à ladite unité de gestion et de contrôle (3) et apte à communiquer avec au moins une unité de traitement à distance (C),
- au moins un dispositif de localisation (15) pour localiser la position dudit véhicule, et
- au moins un dispositif pour mesurer l'accélération/décélération instantanée (17) dudit véhicule,
dans lequel l'appareil télématique (1) comprend des moyens de connexion électrique (13) aptes à connecter lesdits moyens de traitement électroniques (2) à ladite batterie (B) ;
l'appareil télématique (1) étant **caractérisé en ce qu'**il comprend des moyens de support (5) comprenant un réceptacle sensiblement en forme de boite (5) qui loge complètement les moyens de traitement électroniques (2) et des moyens d'attache aptes à fixer ledit réceptacle en forme de boite (5) sur une portion supérieure de ladite batterie (B), et **en ce que** lesdits moyens de connexion électrique (13) comprennent une paire de câbles d'alimentation (13) connectés aux moyens de traitement électroniques 2 et possédant, aux extrémités libres, des connecteurs électriques respectifs (14) aptes à être connectés directement au pôle électrique positif (P+) et au pôle électrique négatif (P-) de la batterie (B), l'appareil télématique étant **caractérisé en outre en ce que** lesdits moyens de traitement électroniques (2) comprennent des moyens de stockage (16) aptes à stocker un code d'identification de l'appareil (1) et un code d'identification du véhicule, et que lesdits moyens de traitement électroniques comprennent des moyens de vérification configurés pour contrôler si ledit code d'identification de l'appareil (1) et ledit code d'identification du véhicule sont corrects ou non, dans lequel lesdits moyens de traitement électroniques (2) peuvent être connectés à un dispositif anti-allumage dudit véhicule et sont aptes à forcer une coupure du moteur dans le cas où lesdits moyens de vérification détectent que au moins un parmi ledit code d'identification de l'appareil et ledit code d'identification du véhicule est incorrect.

2. Appareil télématique (1) selon la revendication 1, **caractérisé en ce que** lesdits moyens d'attache (9) comprennent au moins une couche adhésive (10) positionnée entre ledit boîtier (5) et ladite batterie (B).

3. Appareil télématique (1) selon la revendication 1, **caractérisé en ce que** lesdits moyens d'attache (9) sont du type de moyens de sécurisation mécaniques.

4. Appareil télématique (1) selon l'une ou plusieurs des revendications précédentes, **caractérisé en ce que** lesdits moyens d'attache (9) comprennent au moins un élément de sécurisation (11) pouvant être associé à ladite batterie (B) et au moins un élément de retenue (12) pour retenir ledit boîtier (5) sur ledit élément de sécurisation (11).

5. Appareil télématique (1) selon la revendication 1, **caractérisé en ce que** ladite unité de communication (4) comprend au moins un émetteur et/ou un récepteur fonctionnant avec des protocoles de téléphonie mobile.

6. Appareil télématique (1) selon la revendication 5, **caractérisé en ce que** lesdits protocoles de téléphonie mobile sont choisis dans le groupe comprenant le GSM, le GPRS, l'UMTS ou similaires.

7. Appareil télématique (1) selon la revendication 1, **caractérisé en ce que** ladite unité de communication (4) comprend au moins une antenne pour l'émission/réception d'au moins un signal vers/depuis ladite unité de traitement distante (C).

8. Appareil télématique (1) selon la revendication 1 **caractérisé en ce que** ledit dispositif de localisation (15) comprend au moins un récepteur de signaux de satellites.

9. Appareil télématique (1) selon l'une ou plusieurs des revendications précédentes, **caractérisé en ce qu'**il comprend une unité de communication supplémentaire (18) apte à communiquer avec au moins un dispositif électronique (D) installé sur ledit véhicule.

10. Appareil télématique (1) selon la revendication 9, **caractérisé en ce que** ladite unité de communication supplémentaire (18) comprend des moyens d'émission/réception au moyen d'ondes acheminées à travers la ligne d'alimentation du véhicule associée à ladite batterie (B).

11. Appareil télématique (1) selon la revendication 9, **caractérisé en ce que** ladite unité de communication supplémentaire (18) comprend des moyens d'émission/réception de signaux radiofréquences vers/depuis au moins un module radiofréquence associé audit dispositif électronique (D).

12. Appareil télématique (1) selon la revendication 9, **caractérisé en ce qu'**il comprend au moins un port de connexion électrique associé auxdits moyens de traitement électroniques (2) et pouvant être associé à une voie de communication dudit véhicule du type CAN (de l'anglais "Controller Area Network") ou similaire, ladite unité de communication supplémentaire (18) comprenant des moyens d'émission/réception de signaux à travers ladite voie de communication.

13. Appareil télématique (1) selon l'une ou plusieurs des revendications précédentes, **caractérisé en ce qu'**il comprend au moins une unité d'alimentation de secours, associée auxdits moyens de traitement électroniques (2) et qui peut être activée pour permettre l'envoi d'au moins une communication de secours vers ladite unité de traitement distante (C) en cas de détachement et/ou de manipulations intempestives de ladite batterie (B).

14. Appareil télématique (1) selon la revendication 13, **caractérisé en ce que** ladite unité d'alimentation de secours est du type d'un supercondensateur ou similaire.
